# EUROPEAN PATENT APPLICATION

(11) **EP 2 482 531 A1**
(43) Date of publication of application: **01.08.2012**
(21) Application number: 10818642.0
(22) Date of filing: 18.08.2010
(51) Int. Cl.: H04M 3/00, H04M 1/00, H04M 3/487

(54) **COMMUNICATION METHOD, COMMUNICATION SYSTEM, SERVER AND PROGRAM**

(30) Priority: 24.09.2009 JP 2009218981
(71) Applicant: Sony Corporation, Tokyo 108-0075 (JP)
(72) Inventor: TAKAMURA, Kazuhisa, Tokyo 108-0075 (JP)
(74) Representative: Horner, David Richard
(86) International application number: PCT/JP2010/063897
(87) International publication number: WO 2011/036966

(57) **Abstract**

Provided is a communication method, a communication, system, a server, and a program capable of promptly providing a user with a service that is near the user. The communication method is provided, including a reading step of reading identification data including position information and information about the service by a device for using the service; a transmitting step of transmitting the read identification data to a predetermined communication channel by the device; a receiving step of receiving the transmitted identification data by the server; a communication channel selecting step of selecting a communication channel for providing the service based on the position information included in the received identification data by the server; an execution server selecting step of selecting an execution server executing a program for providing the service by the server based on information about the selected communication channel; an execution step of executing the program by the selected execution server; and an execution result transmitting step of transmitting the result of the execution of the program to the device by the selected execution server.

## Description

### Technical Field

The present invention relates to a communication method, a communication system, a server and a program.

### Background Art

An execution method by a concept such as an "X terminal" or a "thin client" has been recently suggested as a.method in which a mobile terminal executes an application via a network. In the method, for example, the mobile terminal requests the execution of the application to a server on the network and the server executes the application.

As the related art, Patent Document 1 suggests, for example, a technology that reduces the systemic complexity associated with the placement of the configuration for providing information services.

### Citation List

### Patent Literature

Patent Literature 1: Japanese PCT National Publication No. 2004-523970

### Summary of Invention

### Technical Problem

However, in the case where the network distance from the mobile terminal to the application execution server is large while the mobile terminal has requested the execution of the application and the application execution server executes the application, the communication speed becomes slow and the communication delay is increased. This causes a problem in that the user cannot comfortably execute the application.

Further, there is a problem in that, even if there is another preferable communication channel capable of connecting with the application execution server near the mobile terminal, the mobile terminal cannot recognize the presence of the communication channel and cannot use the communication channel.

Furthermore, there is a problem in that, even if there is a useful service near the user of the mobile terminal, the user cannot easily recognize the presence of, and cannot easily use, the service.

Then, the present invention is provided in consideration of the above-mentioned problems. An object of the present invention is to provide new and improved communication method, communication system, server and program capable of promptly providing the user with a service that is near the user.

### Solution to Problem

According to the first aspect of the present invention in order to achieve the above-mentioned object, there is provided a communication method including a reading step of reading identification data including position information and information about a service by a device for using the service; a transmitting step of transmitting, by the device, the read identification data to a predetermined communication channel; a receiving step of receiving, by a server, the transmitted identification data; a communication channel selecting step of selecting, by the server, a communication channel for providing the service based on the position information included in the received identification data; an execution server selecting step of selecting, by the server, an execution server executing a program for providing the service based on information about the selected communication channel; an execution step of executing the program by the selected execution server; and an execution result transmitting step of transmitting a result of the execution of the program to the device by the selected execution server.

The communication method can further include a providing step of providing the selected execution server with the program by the server after the execution server selecting step.

In the communication method, device information about the device and user information including user setting information can be transmitted together with the read identification data to the predetermined communication channel in the transmitting step.

In the communication method, the transmitted identification data and user information are received in the receiving step, the communication channel for providing the service is selected based on the position information included in the received identification data and the user setting information included in the received user information in the communication channel selecting step, and the execution server executing the program for providing the service can be selected based on the information about the selected communication channel and the device information about the device included in the received user information in the execution server selecting step.

The communication method can further include a changing step of changing the selected communication channel in the absence of the execution server executing the program for providing the service to be selectable in the execution server selecting step.

In the communication channel selecting step of the communication method, a list of the selectable communication channels for providing the service is compiled based on the position information included in the received identification data, a communication channel in the compiled list of the communication channels is provisionally selected in the order of priority as the communication channel for providing the service, and in the case where the provisionally selected communication channel is capable of communication, the provisionally selected communication channel can be selected as the communication channel for providing the service.

In the execution server selecting step of the communication method, a list of selectable execution servers executing the program for providing the service is referenced based on the information about the selected communication channel, an execution server in the referenced list of the execution servers is provisionally selected in the order of priority as the execution server executing the program for providing the service, and in the case where the provisionally selected execution server is capable of communicating with the device, the provisionally selected execution server is selected as the execution server executing the program for providing the service.

According to the second aspect of the present invention in order to achieve the above-mentioned object, there is provided a communication system including a device including a reading part reading identification data including position information and information about a service; and a transmitting part transmitting the read identification data to a predetermined communication channel; a server including a receiving part receiving the transmitted identification data; a communication channel selecting part selecting a communication channel for providing the service based on the position information included in the received identification data; and an execution server selecting part selecting an execution server executing a program for providing the service based on information about the selected communication channel; and an execution server including an execution part executing the program; and an execution result transmitting part transmitting a result of the execution of the program to the device.

According to the third aspect of the present invention in order to achieve the above-mentioned object, there is provided a server including a receiving part receiving identification data including position information and information about a service, the identification data being read and transmitted by a device for using the service; a communication channel selecting part selecting a communication channel for providing the service based on the position information included in the received identification data; and an execution server selecting part selecting an execution server executing a program for providing the service based on information about the selected communication channel.

According to the fourth aspect of the present invention in order to achieve the above-mentioned object, there is provided a program causing a computer to function as a receiving part receiving identification data including position information and information about a service, the identification data being read and transmitted by a device for using the service; a communication channel selecting part selecting a communication channel for providing the service based on the position information included in the received identification data; and an execution server selecting part selecting an execution server executing a program for providing the service based on information about the selected communication channel.

### Advantageous Effects of Invention

According to the present invention as described above, a service near the user can be promptly provided to the user.

### Brief Description of Drawings

[Fig. 1] Fig. 1 is an explanatory view explaining a schematic configuration of a communication system according to an embodiment of the present invention.
[Fig. 2] Fig. 2 is a block diagram showing a schematic configuration of a mobile terminal in the communication system shown in Fig. 1.
[Fig. 3] Fig. 3 is a block diagram showing a schematic configuration of an application providing server in the communication system shown in Fig. 1.
[Fig. 4] Fig. 4 is a flowchart of an application execution process executed by the communication system shown in Fig. 1.
[Fig. 5] Fig. 5 is a flowchart of a communication channel selecting process executed in step S406 shown in Fig. 4.
[Fig. 6] Fig. 6 is a flowchart of an application execution server selecting process executed in step S408 shown in Fig. 4.
[Fig. 7] Fig. 7 is a sequence diagram of the application execution process executed by the communication system shown in Fig. 1.
[Fig. 8] Fig. 8 is an explanatory view explaining an example of the information about an available service included in ID.
[Fig. 9] Fig. 9 is an explanatory view explaining an example of the list of selectable communication channels of the mobile terminal.
[Fig. 10] Fig. 10 is an explanatory view explaining an example of the list of application execution servers.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Note that the description is given in the following order:
1. Communication system
2. Configuration of mobile terminal
3. Configuration of application providing server
4. Application execution process
5. Communication channel selecting process
6. Application execution server selecting process
7. Details of application execution process

### [Communication system]

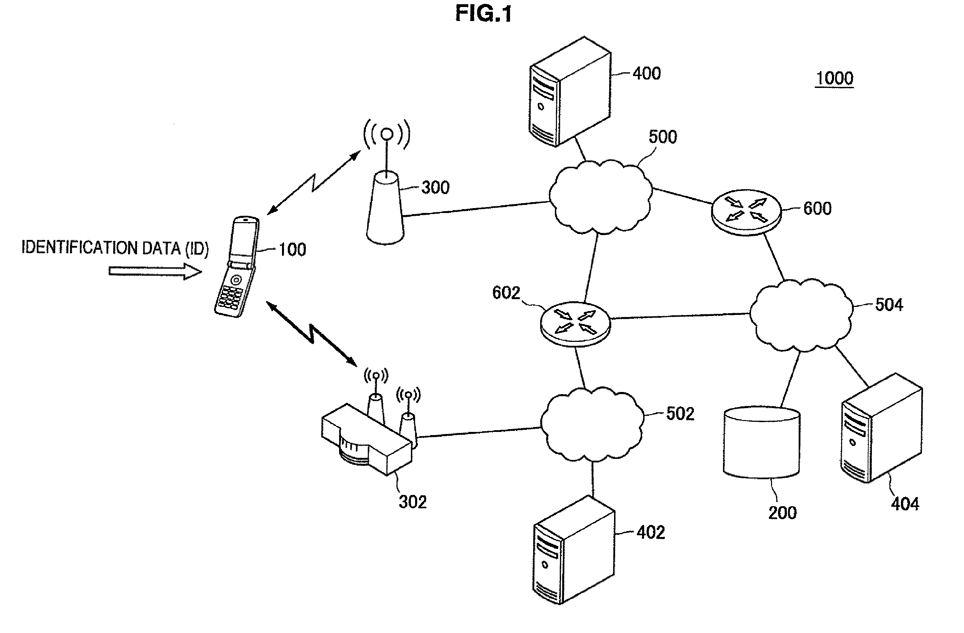

First, a communication system according to the embodiments of the present invention will be described. Fig. 1 is an explanatory view explaining a schematic configuration of a communication system according to the present embodiment.

In Fig. 1, a communication system 1000 includes a mobile terminal 100, an application providing server 200, a base station 300, an access point 302, application execution servers 400, 402 and 404, networks 500, 502 and 504, and routers 600 and 602.

The mobile terminal 100 is a mobile terminal such as a mobile phone, which can read, for example, identification data (hereinafter, referred to as "ID") to use a service at a predetermined place. The ID is a barcode, a two-dimensional barcode, a radio frequency identification (RFID), a piece of broadcast information or a marker. The broadcast information is broadcast with, for example, a beacon of a radio local area network (LAN). The marker can obtain specific information by imaging the marker by a camera and analyzing the information. The ID includes position information and information about an available service. The user of the mobile terminal 100 finds out the ID at the predetermined place and can use, by reading the ID, a service indicated by the ID when the user wants to use the service. Upon reading the ID, the mobile terminal 100 transmits the read ID and the user information by radio communication to the base station 300. The user information includes device information about the mobile terminal 100 and user setting information that the user can arbitrarily set. The device information about the mobile terminal 100 includes, for example, the information about the resolution of the display.

The base station 300 can communicate with the mobile terminal 100 by radio. Upon receiving the ID and the user information from the mobile terminal 100, the base station 300 transmits the received ID and the user information via the network 500, the router 600 or 602, and the network 504 to the application providing server 200.

The access point 302 is an access point near the mobile terminal 100 that has read the ID. The mobile terminal 100 can communicate, by radio, with the access point 302 by transmitting communication channel setting information to the access point 302.

The application providing server 200 is a server providing an application program. Upon receiving the ID and the user information from the base station 300, the application providing server 200 selects a communication channel of the mobile terminal 100 for remotely executing the application program and an application execution server for executing the application. Then, the application program is provided to the selected application execution server.

The application execution server 400 is connected with the network 500. The application execution server 402 is connected with the network 502. The application execution server 404 is connected with the network 504. The application execution servers 400,402 and 404 can execute an application program provided from the application providing server 200.

The network 500 is a network connected with the base station 300. The network 502 is a network connected with the access point 302. The network 504 is a network connected with the application providing server 200.

The router 600 is a router connecting the network 500 with the network 504. The router 602 is a router connecting the network 500, the network 502 and the network 504 to each other.

### [Configuration of mobile terminal]

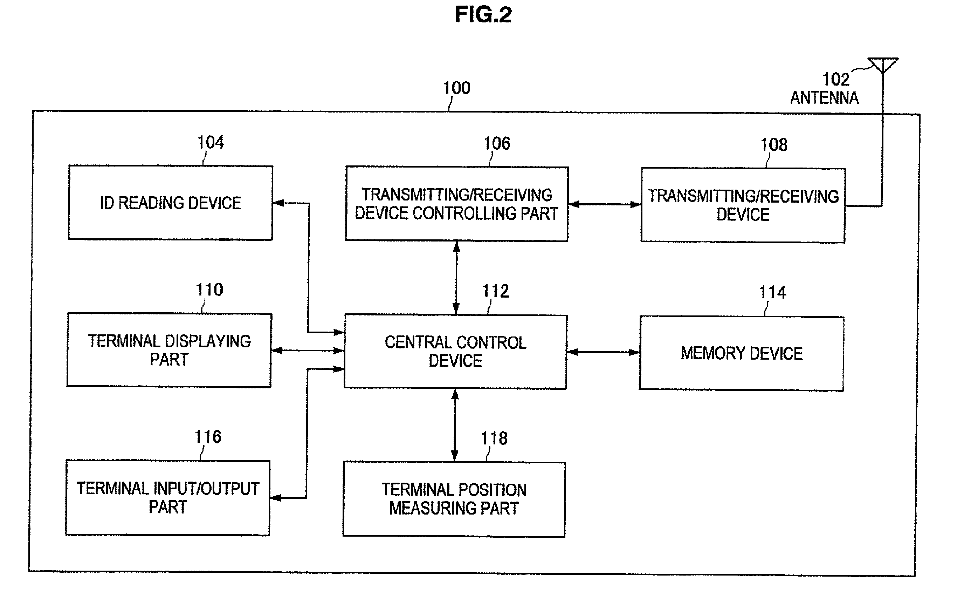

Next, the configuration of the mobile terminal 100 in the communication system 1000 shown in Fig. 1 will be described. Fig. 2 is a block diagram showing a schematic configuration of the mobile terminal 100 in the communication system 1000 shown in Fig. 1.

In Fig. 2, the mobile terminal 100 includes an antenna 102, an ID reading device 104, a transmitting/receiving device controlling part 106, a transmitting/receiving device 108, a terminal displaying part 110, a central control device 112, a memory device 114, a terminal input/output part 116, and a terminal position measuring part 118.

The antenna 102 can transmit and receive data by radio communication. The ID reading device 104 can read an ID. The ID reading device 104 is an example of the reading part of the present invention and may be any device that can read an ID. An example thereof is a camera device.

The transmitting/receiving device controlling part 106 controls the transmitting/receiving device 108. The transmitting/receiving device 108 is an example of the transmitting part of the present invention and is compatible with a plurality of radio communication schemes.

The terminal displaying part 110 outputs the execution result of the application. The central control device 112 controls the ID reading device 104, the transmitting/receiving device controlling part 106, the terminal displaying part 110, the memory device 114, the terminal input/output part 116 and the terminal position measuring part 118.

The memory device 114 stores the device information such as the resolution of the display of the terminal displaying part 110 and the user setting information that the user has set. The terminal input/output part 116 can receive, for example, an operation from the user. The terminal position measuring part 118 can measure the position of the mobile terminal 100 by using a global positioning system (GPS).

### [Configuration of application providing server]

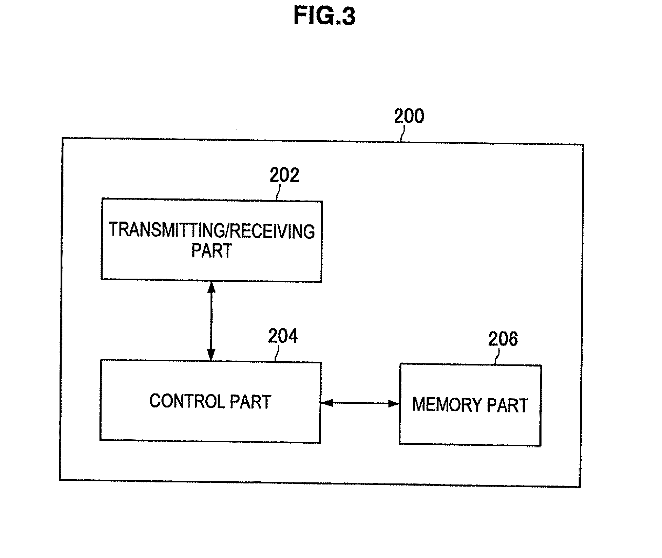

Next, the configuration of the application providing server 200 in the communication system 1000 shown in Fig. 1 will be described. Fig. 3 is a block diagram showing a schematic configuration of the application providing server 200 in the communication system 1000 shown in Fig. 1.

In Fig. 3, the application providing server 200 includes a transmitting/receiving part 202, a control part 204 and a memory part 206.

The transmitting/receiving part 202 is an example of the receiving part of the present invention and can receive, for example, the above-mentioned ID and the user information transmitted from the base station 300. Further, the transmitting/receiving part 202 can transmit, for example, an application program stored in the memory part 206 to an application execution server. Furthermore, the transmitting/receiving part 202 can transmit, for example, the above-mentioned communication channel setting information via the base station 300 or the like to the mobile terminal 100.

The control part 204 is an example of the communication channel selecting part and the execution server selecting part of the present invention and controls the transmitting/receiving part 202 and the memory part 206. The memory part 206 stores, for example, an application program relating to the information about the available service included in the ID received from the base station 300. Further, the memory part 206 stores, for example, the information about the surrounding radio environment relating to the position information included in the ID received from the base station 300.

Note that the configurations of the application execution servers 400, 402 and 404 are nearly identical to that of the application providing server 200. The different points are, for example, that the transmitting/receiving part 202 receives an application program and transmits the result of the application program execution, and that the control part 204 executes an application program. As for the application execution server 400, 402 and 404, the transmitting/receiving part 202 is an example of the execution result transmitting part of the present invention. The control part 204 is an example of the execution part of the present invention.

### [Application execution process]

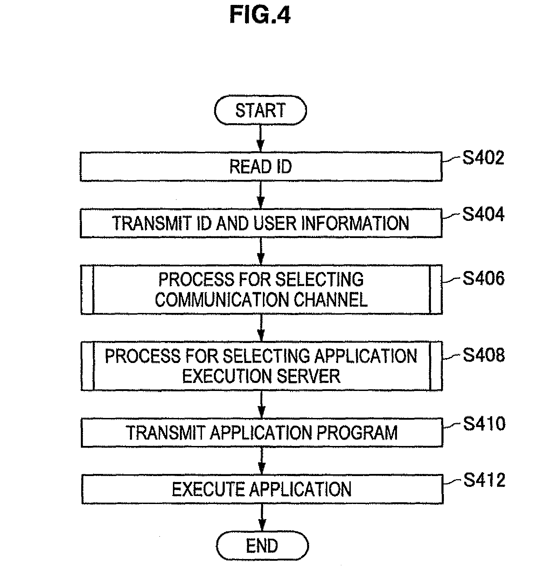

The application execution process executed by the communication system 1000 shown in Fig. 1 will be described below. Fig. 4 is a flowchart of the application execution process executed by the communication system 1000 shown in Fig. 1. This process is executed when, for example, the user of the mobile terminal 100 has found an ID indicating a service at a predetermined place and wants to use the service.

In Fig. 4, first, the mobile terminal 100 reads the ID that is at the predetermined place (step S402).

Next, the mobile terminal 100 transmits the ID read in step S402 and the user information stored in the memory device 114 to the base station 300. Then, the base station 300 transmits the ID and the user information received from the mobile terminal 100 to the application providing server 200 (step S404).

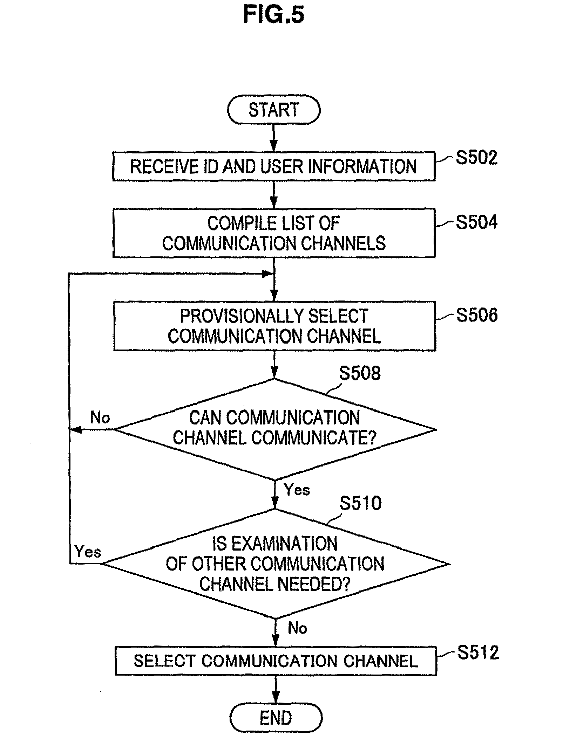

Next, the application providing server 200 receives the ID and the user information transmitted from the base station 300 in step S404 and selects a communication channel of the mobile terminal 100, for example, a communication channel passing through the access point 302 to execute the communication channel selecting process shown in Fig. 5 and described below in order to remotely execute the application program (step S406).

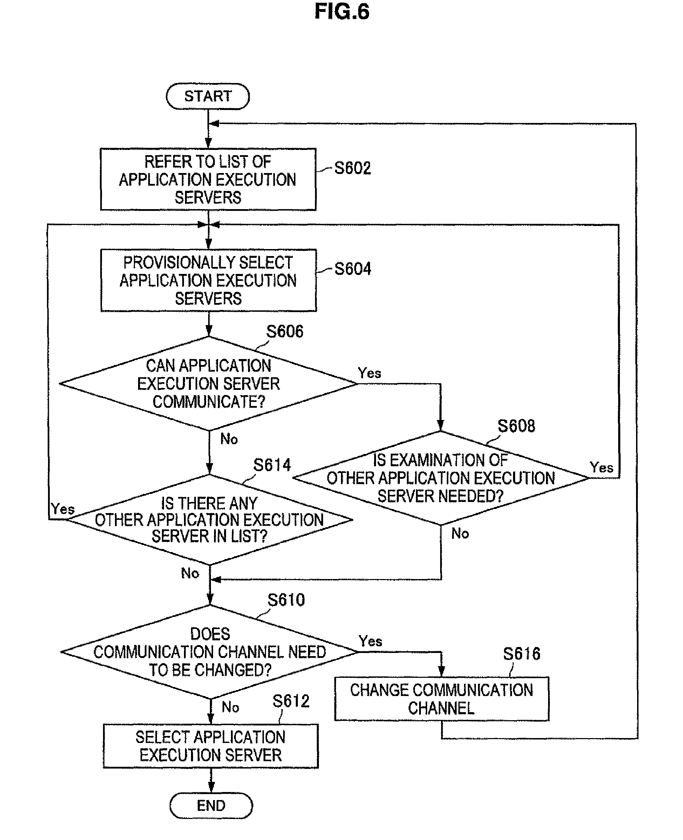

Next, the application providing server 200 executes the application execution server selecting process shown in Fig. 6 and described below to select the application execution server for executing an application program, for example, the application execution server 402 (step S408).

Next, the application providing server 200 transmits the application program received in step S406 to the application execution server 402 selected in step S408 (step S410). The application program relates to the information about the available service included in the ID.

Next, the mobile terminal 100 causes the application execution server 402 to execute the application program and receives the execution result from the application execution server 402 (step S412). Then, the process is terminated.

### [Communication channel selecting process]

Fig. 5 is a flowchart of the communication channel selecting process executed in step S406 shown in Fig. 4.

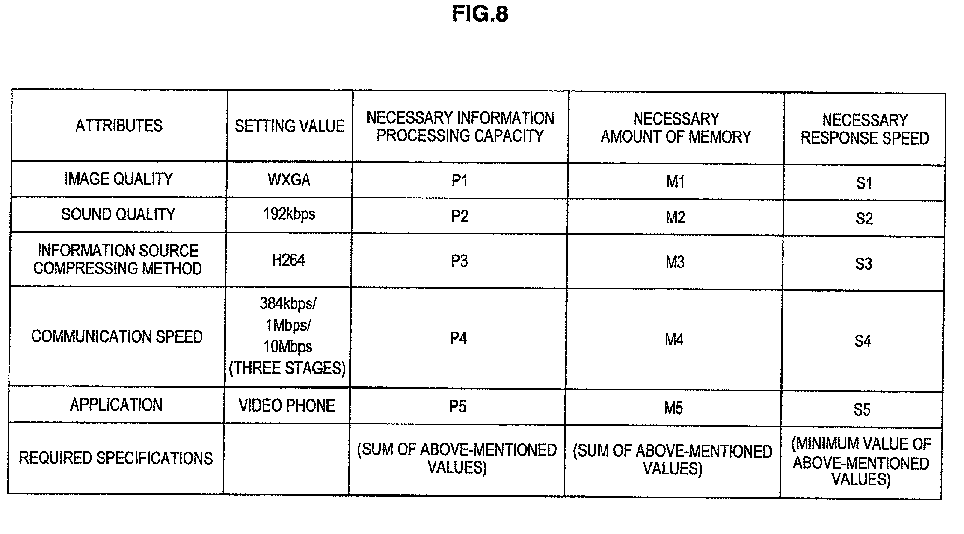

In Fig. 5, first, the application providing server 200 receives the ID and the user information transmitted from the base station 300 in step S404 (step S502). The application providing server 200 can understand, from the information about the available service included in the received ID, the contents of the service that the user wants to use. Fig. 8 is an explanatory view explaining an example of the information about an available service included in the ID. The information about the available service included in the ID includes, for example, the information about attributes, setting value, necessary information processing capacity, necessary amount of memory, and necessary response speed.

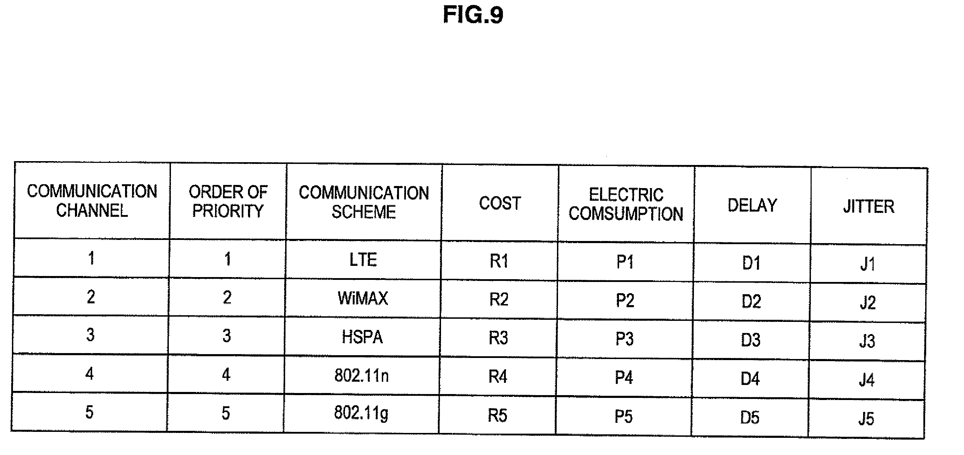

Next, the application providing server 200 compiles a list of the selectable communication channels of the mobile terminal 100 to remotely execute the application program based on the position information included in the ID received in step S502, the information about the surrounding radio environment related to the position information, and the user setting information included in the user information (step S504). Fig. 9 is an explanatory view explaining an example of the list of selectable communication channels of the mobile terminal 100. In Fig. 9, a communication channel 1 is, for example, a communication channel passing through the access point 302. The list of selectable communication channels of the mobile terminal 100 includes, for example, the information about the communication channels, the order of the priority, the communication scheme, the cost, the electric consumption, the delay, and the jitter.

Next, the application providing server 200 provisionally selects the highest priority communication channel in the compiled list of the communication channels as the communication channel of the mobile terminal 100 to remotely execute the application program (step S506). For example, in the list shown in Fig. 9, the communication channel that passes through the access point 302 of the communication channel 1 is provisionally selected.

Next, the application providing server 200 transmits the communication channel setting information for connecting to an access point, for example, the access point 302 and the mobile terminal 100, and performs a trial communication between the access point 302 and the mobile terminal 100. The access point makes up the communication channel that has been provisionally selected in step S506. Then, the application providing server 200 receives the result of the trail communication from the access point 302 and determines whether the provisionally selected communication channel can communicate (step S508).

If the provisionally selected communication channel cannot communicate ("No" in step S508) as the result of the determination in step S508, the process goes back to step S506. In step S506, the application providing server 200 provisionally selects the second highest priority communication channel as the communication channel of the mobile terminal 100.

If the provisionally selected communication channel can communicate ("Yes" in step S508) as the result of the determination in step S508, the application providing server 200 determines whether an examination is needed to determine whether the other communication channel in the compiled list of the communication channels can communicate (step S510).

If the other communication channel needs to be examined ("Yes" in step S510) as the result of the determination in step S510, the process goes back to step S506. In step S506, the application providing server 200 provisionally selects the other communication channel as the communication channel of the mobile terminal 100.

If the other communication channel does not need to be examined ("No" in step S510) as the result of the determination in step S510, the application providing server 200 selects the communication channel provisionally selected in step S506 as the communication channel of the mobile terminal 100 to remotely execute the application program (step S512). At this point, this process is terminated.

### [Application execution server selecting process]

Fig. 6 is a flowchart of the application execution server selecting process executed in step S408 shown in Fig. 4.

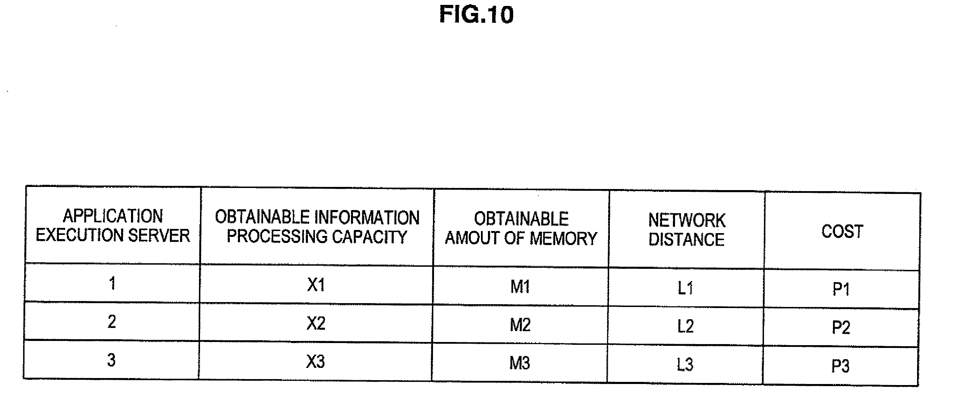

In Fig. 6, first, the application providing server 200 refers to the list of the application execution servers that are related to the communication channel selected in step S512 and are stored in the memory part 206 (step S602). Fig. 10 is an explanatory view explaining an example of the list of the application execution servers. If the communication channel passing through the access point 302 is selected in step S512, the application execution server 1 is, for example, the application execution server 402 in Fig. 10. The list of the application execution servers includes, for example, the information about the application execution servers, the obtainable information processing capacity, the obtainable amount of memory, the network distance, and the cost.

Next, the application providing server 200 provisionally selects, from the referenced list of the application execution servers, the optimal application execution server to execute the application program related to the service understood in step S502 as the application execution server that executes the application program (step S604). For example, the application execution server 402 corresponding to the application execution server 1 is provisionally selected from the list shown in Fig. 10.

Next, the application providing server 200 inquires of the application execution server provisionally selected in step S604, for example, the application execution server 402 whether the application execution server can communicate with the mobile terminal 100. Then, the application providing server 200 receives the response to the inquiry from the application execution server 402 and determines whether the provisionally selected application execution server can communicate (step S606). Note that, in step S606, the application providing server 200 can inquire of the application execution server that has been provisionally selected in step S604, for example, the application execution server 402 whether the application execution server can execute the application program.

If the provisionally selected application execution server can communicate ("Yes" in step S606) as the result of the determination in step S606, the application providing server 200 determines whether an examination is needed to determine whether the other application execution server in the referenced list of the application execution servers can communicate (step S608).

If the other application execution server needs to be examined ("Yes" in step S608) as the result of the determination in step S608, the process goes back to step S604. In step S604, the application providing server 200 provisionally selects the other application execution server as the application execution server that executes the application program.

If the other application execution server does not need to be examined ("No" in step S608) as the result of the determination in step S608, the process goes to step S610 described below.

If the provisionally selected application execution server cannot communicate ("No" in step S606) as the result of the determination in step S606, the application providing server 200 determines whether there is any other application execution server in the referenced list of the application execution servers (step S614).

If there is the other application execution server in the referenced list of the application execution servers ("Yes" in step S614) as the result of the determination in step S614, the process goes back to step S604. In step S604, the application providing server 200 provisionally selects the other application execution server that is second suitable for the execution of the application program as the application execution server that executes the application program.

If there is not any other application execution server in the referenced list of the application execution servers ("No" in step S614) as the result of the determination in step S614, the process goes to step S610.

In the next step S610, the application providing server 200 determines whether the communication, channel that has been selected in step S512 needs to be changed (step S610). The communication channel needs to be changed, for example, in the case where there is not an application execution server which can communicate with the mobile terminal 100 in the referenced list of the application execution servers, or in the case where there is not an application execution server which can execute the application program. Further, the communication channel needs to be changed, for example, in the case where, although there is an application execution server which can communicate with the mobile terminal 100 in the referenced list of the application execution servers, the application execution server is far away from the mobile terminal 100.

If the communication channel needs to be changed ("Yes" in step S610) as the result of the determination in step S610, the application providing server 200 changes the communication channel of the mobile terminal 100 to the other communication channel in order to remotely execute the application program (step S616). Then, the process goes back to step S602. In step S602, the list of the application execution servers is referenced. The list is related to the other communication channel and is stored in the memory part 206.

If the communication channel does not need to be changed ("No" in step S610) as the result of the determination in step S610, the application providing server 200 selects the application execution server provisionally selected in step S604 as the application execution server that executes the application program (step S612). At this point, this process is terminated.

According to the application execution process shown in Fig. 4, the ID read by the mobile terminal 100 and the user information about the mobile terminal 100 are transmitted to the application providing server 200. The application providing server 200 selects the communication channel of the mobile terminal 100, for example, the communication channel passing through the access point 302, and the application execution server that executes the application, for example, the application execution server 402. Then, the application providing server 200 transmits the application program to the application execution server 402 so that the mobile terminal 100 makes the application execution server 402 execute the application program, and receives the result of the execution from the application execution server 402. The access point 302 is an access point that is near the mobile terminal 100 that has read the ID. The application execution server 402 is an application execution server that has a short network distance from the mobile terminal 100. The application execution server 402 having a short network distance executes the application through the access point 3 02 nearby so that the communication speed can be increased. This allows the delay of the communication to be small. Accordingly, the service near the user of the mobile terminal 100 can be promptly provided to the user.

### [Details of application execution process]

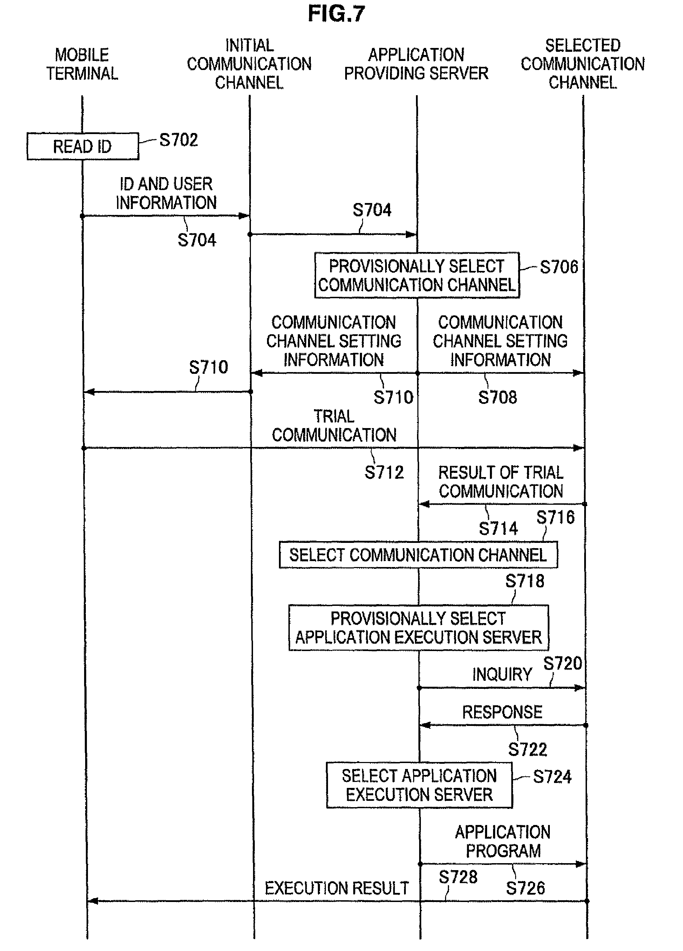

The details of the application execution process executed by the communication system 1000 shown in Fig. 1 will be described below. Fig. 7 is a sequence diagram of the application execution process executed by the communication system 1000 shown in Fig. 1.

In Fig. 7, first, the mobile terminal 100 reads the ID that is at a predetermined place (step S702) and transmits the read ID and the user information to the initial communication channel, that is, the communication channel through the base station 300 and transmits the ID and the user information to the application providing server 200 (step S704). Note that the address information about the application providing server 200 to be transmitted can be included in the ID.

Next, the application providing server 200 provisionally selects the communication channel of the mobile terminal 100 based on the received ID and the user information to remotely execute the application program (step S706).

Next, the application providing server 200 transmits the communication channel setting information for connecting the mobile terminal 100 to the communication channel that has been provisionally selected in step S706, for example, the communication channel passing through the access point 302 (step S708).

Further, the application providing server 200 transmits, for example, the communication channel setting information for connecting the access point 302 to the initial communication channel, that is, the communication channel passing through the base station 300 in order to transmit the communication channel setting information to the mobile terminal 100 (step S710).

Next, the mobile terminal 100 performs a trial communication with, for example, the access point 302 by using the communication channel setting information that has been received in step S710 (step S712). Note that, in step S712, the trial communication with the mobile terminal 100 can be performed by using the communication channel setting information that the access point 302 has received in step S708.

Next, for example, the access point 302 transmits the result of the trial communication to the application providing server 200 (step S714).

Next, the application providing server 200 selects the communication channel that has been provisionally selected in step S706 as the communication channel of the mobile terminal 100 to remotely execute the application program (step S716).

Next, the application providing server 200 provisionally selects the application execution server that executes the application program (step S718).

Next, the application providing server 200 inquires of the application execution server provisionally selected in step S718, for example, the application execution server 402 whether the application execution server can communicate with the mobile terminal 100 (step S720).

Next, for example, the application execution server 402 transmits the response to the inquiry from the application providing server 200 to the application providing server 200 (step S722).

Next, the application providing server 200 selects the application execution server provisionally selected in step S718 as the application execution server that executes the application program (step S724).

Next, the application providing server 200 transmits the application program related to the information about the available service included in the ID that has been received in step S704 to the application execution server that has been selected in step S724, for example, the application execution server 402 (step S726).

Next, for example, upon receiving the request for the execution of the application program from the mobile terminal 100, the application execution server 402 executes the application program and transmits the result of the execution to the mobile terminal 100 (step S728).

According to the application execution process shown in Fig. 7, the service near the user of the mobile terminal 100 can be promptly provided to the user.

In the above-mentioned present embodiments, although the application providing server that provides the application program executes, for example, the communication channel selecting process shown in Fig. 5 and the application execution server selecting process shown in Fig. 6, the server that executes these processes can be different from the application providing server that provides the application program.

Further, a system or an apparatus is provided with the storage medium storing the program codes of the software to implement the function of each of the above-mentioned embodiments so that the computer (or the CPU, the MPU or the like) of the system or the apparatus reads and executes the program codes stored in the storage medium. This can also achieve the object of the present invention.

In this case, the program codes themselves read from the storage medium implement the function of each of the above-mentioned embodiments. This causes the program codes and the storage medium storing the program codes to constitute the present invention.

Further, for example, a floppy (registered trademark) disk; a hard disk; an optical disk such as a magneto-optical disk, a CD-ROM, a CD-R, a CD-RW, a DVD-ROM, a DVD-RAM, a DVD-RW, or a DVD+RW; a magnetic tape; a nonvolatile memory card; or a ROM can be used as the storage medium to provide the program codes. Alternatively, the program codes can be downloaded via a network.

Furthermore, the function of each of the above-mentioned embodiments is implemented not only in the case where the computer executes the read program codes, but also in the case where the operating system (OS) or the like that operates on the computer executes a part or the whole of the actual processes based on the instructions of the program codes.

Furthermore, the function of each of the above-mentioned embodiments is also implemented in the following case. The program codes read from the storage medium are written in a memory included in a function extension board inserted in the computer or a function extension unit connected with the computer. Then, a CPU or the like included in the extension board or the extension unit executes a part or the whole of the actual processes by using the extension functions based on the instructions of the program codes.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

### Reference Signs List

- 100: Mobile terminal
- 200: Application providing server
- 300: Base station
- 302: Access point
- 404, 402, 404: Application execution server
- 500, 502, 504: Network
- 600,602: Router

## Claims

1. A communication method comprising:
a reading step of reading identification data including position information and information about a service by a device for using the service;
a transmitting step of transmitting the read identification data to a predetermined communication channel by the device;
a receiving step of receiving, by a server, the transmitted identification data;
a communication channel selecting step of selecting, by the server, a communication channel for providing the service based on the position information included in the received identification data;
an execution server selecting step of selecting, by the server, an execution server executing a program for providing the service based on information about the selected communication channel;
an execution step of executing the program by the selected execution server; and
an execution result transmitting step of transmitting a result of the execution of the program to the device by the selected execution server.

2. The communication method according to claim 1, further comprising:
a providing step of providing the selected execution server with the program by the server after the execution server selecting step.

3. The communication method according to claim 1, wherein device information about the device and user information including user setting information are transmitted together with the read identification data to the predetermined communication channel in the transmitting step.

4. The communication method according to claim 3, wherein the transmitted identification data and user information are received in the receiving step,
the communication channel for providing the service is selected based on the position information included in the received identification data and the user setting information included in the received user information in the communication channel selecting step, and
the execution server executing the program for providing the service is selected based on the information about the selected communication channel and the device information about the device included in the received user information in the execution server selecting step.

5. The communication method according to claim 1, further comprising:
a changing step of changing the selected communication channel in the absence of the execution server executing the program for providing the service to be selectable in the execution server selecting step.

6. The communication method according to claim 1, wherein, in the communication channel selecting step,
a list of the selectable communication channels for providing the service is compiled based on the position information included in the received identification data,
a communication channel in the compiled list of the communication channels is provisionally selected in the order of priority as the communication channel for providing the service, and
in the case where the provisionally selected communication channel is capable of communication, the provisionally selected communication channel is selected as the communication channel for providing the service.

7. The communication method according to claim 1, wherein, in the execution server selecting step,
a list of selectable execution servers executing the program for providing the service is referenced based on the information about the selected communication channel,
an execution server in the referenced list of the execution servers is provisionally selected in the order of priority as the execution server executing the program for providing the service, and
in the case where the provisionally selected execution server is capable of communicating with the device, the provisionally selected execution server is selected as the execution server executing the program for providing the service.

8. A communication system comprising:
a device including:
a reading part reading identification data including position information and information about a service; and
a transmitting part transmitting the read identification data to a predetermined communication channel;
a server including:
a receiving part receiving the transmitted identification data;
a communication channel selecting part selecting a communication channel for providing the service based on the position information included in the received identification data; and
an execution server selecting part selecting an execution server executing a program for providing the service based on information about the selected communication channel; and
an execution server including:
an execution part executing the program; and
an execution result transmitting part transmitting a result of the execution of the program to the device.

9. A server comprising:
a receiving part receiving identification data including position information and information about a service, the identification data being read and transmitted by a device for using the service;
a communication channel selecting part selecting a communication channel for providing the service based on the position information included in the received identification data; and
an execution server selecting part selecting an execution server executing a program for providing the service based on information about the selected communication channel.

10. A program causing a computer to function as:
a receiving part receiving identification data including position information and information about a service, the identification data being read and transmitted by a device for using the service;
a communication channel selecting part selecting a communication channel for providing the service based on the position information included in the received identification data; and
an execution server selecting part selecting an execution server executing a program for providing the service based on information about the selected communication channel.
